Europäisches Patentamt

(19) European Patent Office

Office européen des brevets

(11) Publication number: 0 185 166
A1

## (12) EUROPEAN PATENT APPLICATION

(21) Application number: 85113404.9

(22) Date of filing: 22.10.85

(51) Int. Cl.⁴: G 01 N 21/00
G 01 N 35/00, G 01 B 7/00

(30) Priority: 13.11.84 FI 844452

(43) Date of publication of application:
25.06.86 Bulletin 86/26

(84) Designated Contracting States:
AT BE CH DE FR GB IT LI LU NL SE

(71) Applicant: EFLAB OY
Pulttitie 9
F-00810 Helsinki 81(FI)

(72) Inventor: Härmä, Esa
Ruukinlahdentie 6 A 16
SF-00200 Helsinki(FI)

(72) Inventor: Kainiemi, Aimo
Viiniementie 12 B 9
SF-00270 Espoo(FI)

(74) Representative: Patentanwälte Müller-Boré, Deufel,
Schön, Hertel, Lewald, Otto
Postfach 26 02 47 Isartorplatz 6
D-8000 München 26(DE)

(54) Identifier of location.

(57) Identifier of the location of the sample frame (16) in a photometer, in which said identifier there are, placed in the sample frame, two metal rods and, placed underneath the measurement plane, inductive approach detectors. A sample disc (10) is placed in the frame, and by displacing the frame on the measurement plane, each sample pit (12) in its turn is brought to underneath the tip (14) for measurement. Each metal rod causes a signal in a certain detector, and in this way it is possible to identify the tip that is being measured at each particular time.

Fig.1.

EP 0 185 166 A1

Identifier of location

The present invention is concerned with a photometer in which the optical densities of several samples are measured alternatingly, which said samples are placed in measurement vessels located in a particular sample disc. The invention is in particular concerned with a system by means of which the location of the sample disc on the measurement plane can be identified precisely.

In photometric measurements, a so-called pit disc is frequently used as the measurement basis, in which said disc there are several sample vessels, e.g., in an 8 x 12 matrix. The pit disc is shifted on the measurement plane of the photometer so that the desired pit becomes in turns positioned underneath the measurement head of the photometer. Even though the measurement itself and the writing out of the output can be performed automatically, a problem still remaining is how to identify the pit that is being measured at each particular time automatically.

In the US Patent 4,397,560 a method is suggested for the identification of the location of a sample disc. Therein an 8 x 12 sample disc is placed in a frame in which magnets of a length equalling the lengths of the vertical and horizontal lines in the disc are placed perpendicularly to each other. Underneath the measurement plane, there are, correspondingly, 8 + 12 magnetic detectors in two lines perpendicular to each other as spaced in a way corresponding to the spacing of the sample pits. When a certain sample pit is in the measurement position, signals are received to the magnetic detectors corresponding both to the horizontal line concerned and to the vertical line concerned. This system, however, involves the drawback that the magnetic rods must be rather precisely perpendicular to the lines of detectors. This requires particular care from the operator in apparatuses in which the disc is shifted on the measurement plane manually.

In the equipment now invented, the location of the sample disc on the measurement plane is identified by means of two metal rods placed in the frame and by means of inductive approach detectors placed underneath the plane.

By means of this arrangement, above all the advantage is obtained that the sample disc may deviate from its correct angle to quite a high extent without interference with the obtaining of a correct signal. This facilitates the measurement and makes it rapid.

A preferred embodiment of the invention will be illustrated in more detail by means of the attached drawings.

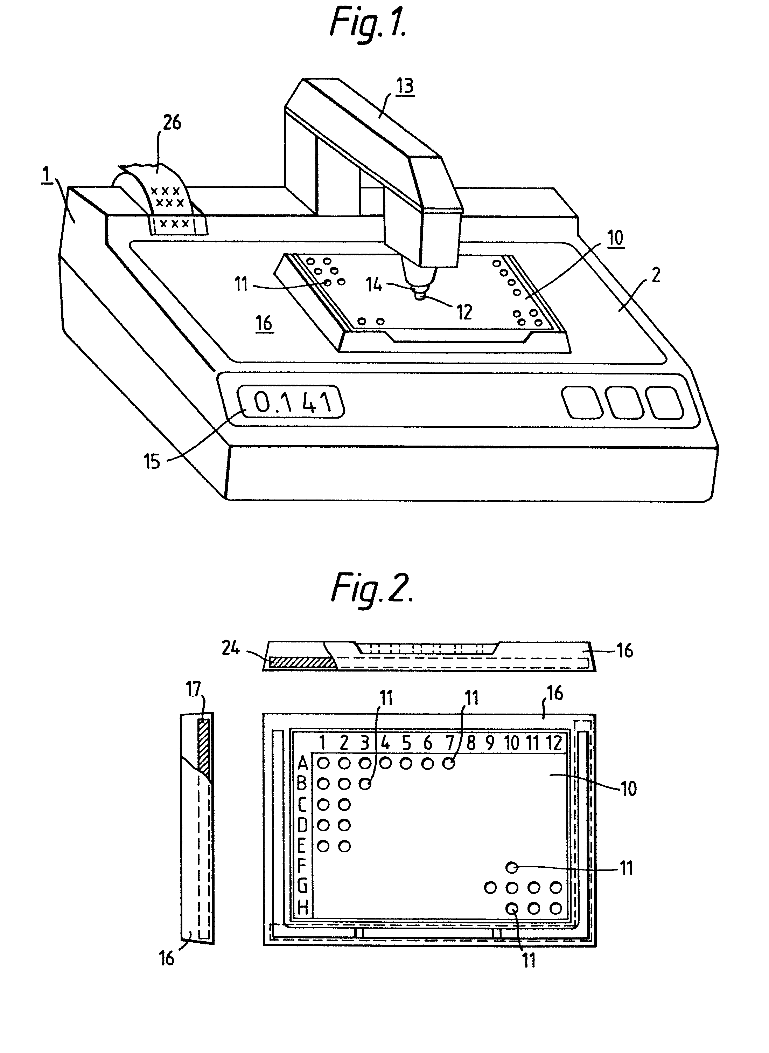

Figure 1 shows a photometer onto whose measurement plane a pit disc to be measured has been brought in its measurement frame.

Figure 2 shows a pit disc, a measurement frame, as well as metal rods installed in the measurement frame.

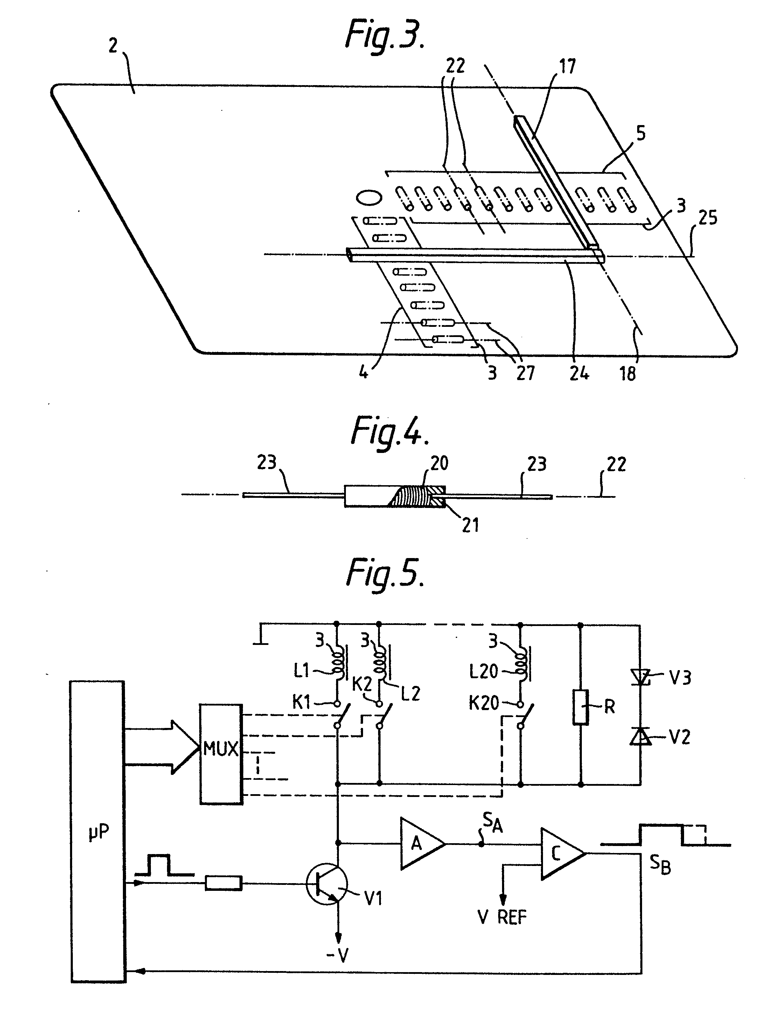

Figure 3 suggests the measurement plane, the approach detectors, and the metal rods to be identified.

Figure 4 is a detailed view of an inductive approach detector.

Figure 5 shows a block diagram of the detector electronics related to the approach detectors.

In a photometer 1, a so-called pit disc 10 is used as the sample base, into whose pits 11 the substance to be studied is dosed. The pit disc to be measured is placed on the measurement plane 2 of the photometer so that the pit 12 to be measured becomes positioned facing the tip 14 of the measurement head 13. The pit 12 to be measured is measured by means of photometric methods. The measurement result is shown to the user in a display unit 15, written out by means of the printer 26 of the apparatus's own, or transmitted by means of auxiliary equipment, e.g., to an external printer. The pit disc may be shifted freely on the measurement plane from pit to pit, i.e. the measurement of the pits may take place in any sequence whatsoever. The locations of the pits in the disc are coded in the 96-pit pit disc so that the 12 vertical lines are provided with numbers from left to right in the numerical order 1 to 12, and the 8 horizontal lines are denoted with letters from the top downwards in the alphabetical order A to H. By identifying the location of the pit in the pit disc by means of the apparatus described in the present invention, it is possible to provide the output of the measurement result also with a location code of the pit, and at the same time to improve the convenience of use of the photometer.

For the time of measurement, the pit disc 10 to be measured is placed in a measurement frame 16, at two of whose edge sides metal rods 17 and 24 parallel to the measurement plane are installed, forming an angle of 90 degrees relative each other. During measurement, the rods become positioned close to the face of the measurement plane so that the inductive approach detectors 3 react to the nearness of metal.

The detector parts of the approach detectors are small-size ferrite-core chokes, wherein the detector coil 20 is wound around a rod-shaped miniature ferrite 21 so that the centre axis 22 of the coil runs parallel to the fastening wires 23 starting from both ends of the choke. The approach detectors (20 pcs.) are placed in such a position underneath the measurement plane that, when the tip 14 of the measurement head and the pit 12 to be measured face each other, both of the metal rods cause a signal in one detector. The approach detectors form two lines of detectors, in which the detectors are placed as spaced in accordance with the spacing of the pits in the pit disc, and the lines of detectors form an angle of 90 degrees relative each other, whereat one of the detectors 4 indicates the horizontal line of the pit and one of the detectors 5 indicates the vertical line. The position of the coils in the detectors is such that the centre axes of the detector coils are parallel to the longitudinal axes 18 and 25 of the corresponding metal rods.

As regards their principle of operation, the approach detectors are pulse-current metal detectors. By means of a multiplexer MUX, the microprocessor controlling the photometer places one of the switches K1... K20 in the conductive state. Hereupon the transistor V1 is momentarily controlled to the conductive state so that a rapidly rising current flows in the chosen detector coil, which said current assumes a DC value determined by the resistance of the circuit. This current must not cause saturation phenomena in the core material of the detector coil. At this stage, the coil forms a static magnetic field in the environment. Upon disconnection of the transistor current, the current in the coil is rapidly discharged into the clipper circuit of the counter-electromotive force, formed by the diodes V2 and V3. This varying current induces eddy currents into the conductive metal pieces present in the field of the coil. Upon termination of the disconnection current, the residual current in the detector coil dies rapidly in the resistor R. The eddy currents produced in the metal materials are attenuated clearly more slowly than this signal is, and induce a current in the detector coil, the voltage signal caused by this current being distinguishable from the signal of the coil's own. The amplified coil signal $S_A$ is compared by means of a comparator C with the fixed voltage $V_{ref}$. The output signal $S_B$ of the comparator is the pulse in the upper-voltage state upon disconnection of the transistor current, the upper-state time of the said pulse increasing if there is a metal rod in the field of the switched-on detector coil. By means of this simple detector construction, it is possible to detect a metal rod introduced in the proximity of the detector coil reliably. The controlling microprocessor connects each detector coil K1...K20 in its turn to the detector circuit, whereby the location of a pit in the pit disc can be determined unambiguously. By means of the identifier of a pit in the pit disc in accordance with the invention, good toleration of angle errors of the position of the pit disc is also achieved. The pit disc may be turned over up to 20 degrees diagonally without interference with the detection.

The inductive approach detector may also be constructed as a conventional so-called continuous metal detector, whereat a sinusoidally varying current is fed to the detector coil. This causes a voltage proportional to the self-inductance of the coil in the detector coil, which said voltage is monitored. A metal piece introduced in the field causes a change in the inductance of the coil and, at the same time, in the voltage of the coil. Ferromagnetic metals increase the inductance of the coil, and other metals reduce it. The order of magnitude of this change is, however, only of the same order as the tolerance, $\pm$ 10 %, of commercially available miniature chokes. In practice, this results in the circumstance that each miniature choke must be calibrated separately to be used as an approach detector of the apparatus. The signal received from a pulse-current metal detector is proportional to the conductivity of the metal piece, and the signal shows no effect of the self-inductance of the detector coil, so that no procedure of tuning of individual coils is required.

The measurement system can be constructed as in itself known in prior art, in accordance with the requirements of each particular case. The system may measure, e.g., absorbance, fluorescence or luminescence.

Besides the inductive detector suggested above, for the locating of a pit in a pit disc it is also possible to use a capacitive approach detector, an optical approach detector, or a magnetic approach detector.

The capacitive approach detector is based on a change in the mutual capacitance of the metal strips functioning as the detector, by the effect of the object to be identified, brought into the proximity. The range of sensitivity of such a detector is, however, restricted to the range very near the faces of the capacitor plates in the detector capacitor. Contamination or moistening of the faces as well as mechanical plays of manufacture of the apparatus hamper the identification.

An optical approach detector is based on detection of the light reflected from the face of the object to be identified. This method of identification is made difficult by the changes in the properties of the reflecting or transparent faces by the effect of contamination or ageing. Also, diffused light from the surrounding makes the identification more difficult.

A magnetic approach detector is based on the use of permanent magnets and magnetic detectors. Magnetic detectors, e.g. Hall elements, detect a permanent magnet brought to their proximity. By means of permanent magnets, high values of density of the magnetic flux can, however, only be reached within a limited area of space, and this is why toleration of an angle error in the position of the pit disc is not good: it is about 7 degrees.

Above, a preferred embodiment of the present invention has been described, which said embodiment can be varied in any desired way to another form, within the scope of the attached patent claims.

WHAT IS CLAIMED IS:

1. Identifier of location in a photometer, in which there is a sample frame (16) to be displaced on the measurement plane (2), c h a r a c t e r i z e d in that the identifier includes, fitted in the sample frame (16) as parallel to the measurement plane (2), a first metal rod (17) and, placed in a different direction as compared with the first rod, a second metal rod (24), and, placed in or below the measurement plane, inductive approach detectors (3) so that a metal rod placed straight above a detector causes a signal therein.

2. Identifier as claimed in claim 1, c h a r - a c t e r i z e d in that in the identifier there are first approach detectors (5), in which a signal is caused by the first metal rod, and second approach detectors (4), in which a signal is caused by the second metal rod.

3. Identifier as claimed in claim 2, c h a r - a c t e r i z e d in that the longitudinal axes (18 and 25) of the first metal rod and the second metal rod are perpendicular to each other.

4. Identifier as claimed in claim 2, c h a r - a c t e r i z e d in that the approach detectors are provided with detector coils (20).

5. Identifier as claimed in claim 4, c h a r - a c t e r i z e d in that the axis (22,27) of the detector coil is parallel to the longitudinal axis (18,25) of either one of the metal rods.

6. Method for establishing the position of the sample frame (16) displaceable on the measurement plane (2) of a photometer, c h a r a c t e r i z e d in that the first metal rod (17), fitted in the sample frame (16) as parallel to the measurement plane (2), is allowed to cause a signal in one of the first inductive approach detectors (5), which are placed in or below the measurement plane; that the second metal rod (24), fitted in the sample frame as parallel to the measurement plane but in different direction as compared with the first metal rod, is allowed to cause a signal in one of the second inductive approach detectors (4), which are placed in or below the measurement plane;  and that the said signals are detected.

7.  Method as claimed in claim 6, c h a r - a c t e r i z e d  in that, as the signal, the electromotive force is detected that is induced in the detector coil (20) of the inductive approach detector by the attenuation of the eddy currents induced in the metal rod by an electric current changing in a pulse-shaped way.

0185166

Fig.1.

Fig.2.

## Fig.3.

## Fig.4.

## Fig.5.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| Y,D | US-A-4 397 560 (R.P. ANDRESEN) * column 1, lines 6-11; column 2, line 67 - column 3, line 5; column 3, lines 51-54; claims * | 1,6 | G 01 N 21/00 G 01 N 35/00 G 01 B 7/00 |
| A,D | * whole document * | 2-5,7 | |
| | --- | | |
| Y | GB-A-2 129 566 (AKADEMIET FOR DE TEKNISKE VIDENSKABER SVEJSECENTRALEN) * abstract; figure 1; page 1, lines 6-11; lines 73-93; page 2, lines 22-32, 98-115; page 3, lines 11-16 * | 1,6 | |
| A | * whole document * | 2-5,7 | TECHNICAL FIELDS SEARCHED (Int. Cl.4) |
| | --- | | |
| A | US-A-4 088 842 (T. IKEDO) * abstract; column 1, lines 62-65; column 2, lines 55-68; column 3, lines 12-15; column 3, lines 44-46; claims * | 1,6 | G 01 B 7/00 G 01 N 21/00 |
| | --- | | |
| A | EP-A-0 012 282 (SIEMENS AG) * claims * | 1,6 | |
| | --- | | |
| A | EP-A-0 004 888 (SIEMENS AG) * claims * | 1,6 | |
| | ----- | | |

The present search report has been drawn up for all claims

| Place of search | Date of completion of the search | Examiner |
|---|---|---|
| BERLIN | 10-03-1986 | VINSOME R M |